# EUROPEAN PATENT APPLICATION

(11) **EP 3 392 701 A2**
(43) Date of publication of application: **24.10.2018**
(21) Application number: 16876041.1
(22) Date of filing: 15.12.2016
(51) Int. Cl.: G02F 1/1335, G02B 5/20

(54) **COLOR FILTER**

(30) Priority: 16.12.2015 KR 20150180407
(71) Applicant: Korea Advanced Institute of Science and Technology, Daejeon 34141 (KR); Korea University Research and Business Foundation, Seoul 02841 (KR)
(72) Inventor: SHIN, Jonghwa, Daejeon 34141 (KR); LEE, Heon, Seoul 06585 (KR); KIM, Hyo Wook, Daejeon 34141 (KR); CHOI, Hak Jong, Seoul 02858 (KR)
(74) Representative: Brann AB
(86) International application number: PCT/KR2016/014701
(87) International publication number: WO 2017/105099

(57) **Abstract**

A color filter according to an exemplary embodiment of the present invention includes a substrate; and a plurality of laminated members disposed with a predetermined period on the substrate, wherein each laminated member includes: a first metal layer; a dielectric layer positioned on the first metal layer; and a second metal layer positioned on the dielectric material, and the laminated member simultaneously excites electrical resonance and magnetic resonance in a visible ray region and transmits light that does not resonate, or a first single layer metal member and a plurality of second single layer metal members having different diameter from each other are included, and the single layer metal member excites the electric resonance to block light in the visible ray and transmits light for the wavelength in which the magnetic resonance and the electrical resonance of the single layer metal member are simultaneously excited.

## Description

### [Technical Field]

The present invention relates to a color filter.

### [Background Art]

Liquid crystals are substances having intermediate properties between crystals and liquids. The arrangement of liquid crystal molecules changes according to an external stimulus such as an electric field generated by an applied voltage. This characteristic of liquid crystal molecules makes them useful for producing a display unit.

A color thin film transistor liquid crystal display (TFT-LCD) is currently produced by respectively manufacturing a thin film transistor array panel and a color filter panel and combining them together. The color filter panel includes three colors filter of red, green, and blue.

The color filter realizes three colors of red, green, and blue by using dyes and pigments such as organic materials. However, these organic materials have a problem that chemical and thermal stability thereof deteriorate, and this causes a problem of a deteriorated life-span of a display device.

Therefore, structural color filters using resonance mode such as nano-holes arrays based plasmonic color filters are used as new color filters. However, since these color filters have passband in a resonance region, absorption of light is large by the significant metallic loss at the resonance frequency of the color filter.

The above information disclosed in this Background section is only for enhancement of understanding of the background of the invention and therefore it may contain information that does not form the prior art that is already known in this country to a person of ordinary skill in the art.

### [DISCLOSURE]

### [Technical Problem]

The present invention provides a color filter that transmit light of off-resonance regime and improves transmission efficiency by using multiple resonance structure members controlling orthogonality

### [Technical Solution]

A color filter according to an exemplary embodiment of the present invention includes a substrate; and a plurality of laminated members disposed with a predetermined period on the substrate, wherein each laminated member includes: a first metal layer; a dielectric layer positioned on the first metal layer; and a second metal layer positioned on the dielectric material, and the laminated member simultaneously excites electrical resonance and magnetic resonance in a visible ray region and transmits light that does not resonate.

The first metal layer and the second metal layer may include at least one selected from a group including aluminum, silver, gold, platinum, copper, chromium, nickel, magnesium, sodium, potassium, graphene, indium tin oxide, indium zinc oxide, and doped semiconductor materials.

The first metal layer and the second metal layer may include the same material.

The first metal layer and the second metal layer may include different material.

The dielectric material layer may include an oxide, a nitride, a semiconductor material, or a polymer material.

The dielectric material layer may include at least one material selected from a group consisting of SiO₂, Al₂O₃, Ag₂O, Si₃N₄, MgF₂, an amorphous silicon.

The plurality of laminated members disposed with a predetermined period on the substrate may disposed one shape selected from a group consisting of a rhombus shape, a square shape, a rectangle shape, a hexagon shape, and a parallelogram shape.

The arrangement period of the plurality of laminated members may be between 200 nm to 2000 nm.

The thickness of the first metal layer and the second metal layer may be between 1 nm to 200 nm.

The thickness of the dielectric material layer may be between 1 nm and 500 nm.

The laminated member of the first metal layer, the dielectric layer, and the second metal layer may have a shape of a circular cylinder, a polygonal columnar shape, or a spherical.

The laminated member of the first metal layer, the dielectric layer, and the second metal layer may have the shape of the circular cylinder, and the diameter of the laminated member may be between 50 nm and 1000 nm.

The laminated member may transmit a wavelength of 200 nm to 20 um.

The partial laminated member of the plurality of laminated members may resonate light having a wavelength of a red light and a green light and may transmit light having a wavelength of a blue light.

The partial laminated member of the plurality of laminated members may resonate light having a wavelength of a blue light and a green light and may transmit light having a wavelength of a red light.

The partial laminated member of the plurality of laminated members may resonate light having a wavelength of a blue light and a red light and may transmit light having a wavelength of a green light.

A color filter according to another exemplary embodiment of the present invention includes a substrate; and a plurality of single layer metal members disposed with a predetermined period on the substrate, wherein the single layer metal member includes a first single layer metal member and a plurality of second single layer metal members having different diameters from each other, the single layer metal member blocks light for the wavelength in which an electric resonance is excited, and the single layer metal member transmits light for each wavelength in which the electric resonance is coupled.

The first single layer metal member and the second single layer metal member may independently include at least one selected from a group consisting of aluminum, gold, silver, platinum, copper, chromium, nickel, magnesium, sodium, potassium, graphene, indium tin oxide, indium zinc oxide, doped semiconductor material.

The plurality of single layer metal member disposed with a predetermined period on the substrate may be formed of one shape selected from a group consisting of a rhombus shape, a square shape, a rectangle shape, a hexagon shape, and a parallelogram shape.

The arrangement period of the plurality of single layer metal members may be between 200 nm to 2000 nm.

The thickness of the single layer metal member may be between 1 nm to 200 nm.

The single layer metal member may have a shape of a circular cylinder, a polygonal columnar shape, or a spherical.

The color filter may transmit a green light.

### [Advantageous Effects]

In the color filter according to an exemplary embodiment of the present invention, by appropriately controlling the thickness and the arrangement period of the laminated member and the single layer metal member having the structure of the metal layer, the dielectric material layer, and the metal layer, orthogonality may be appropriately controlled as two electric resonances that are not orthogonal to each other are inducted as the plurality of resonances of the mutually orthogonal electric resonance and magnetic resonance. Also, the light of the non-resonant region may be transmitted, thereby improving the transmittance.

### [Description of the Drawings]

FIG. 1 is a view showing a color filter according to an exemplary embodiment of the present invention, FIG. 1 (a) shows the color filter in which a plurality of laminated members is positioned on a substrate, and FIG. 1 (b) shows the color filter in which a plurality of single layer metal members is positioned on a substrate.
FIG. 2 is a view showing one laminated member of a color filter according to an exemplary embodiment of the present invention of FIG. 1 (a).
FIG. 3 is a view showing a first single layer metal member and a second single layer metal member of the color filter according to an example of FIG. 1 (b).
FIG. 4 is a view showing a computer simulation result of a transmittance (a) having a spectrum of a wide band when wavelengths of two mutually orthogonal resonance modes approach each other and then are not coupled to each other and a transmittance (b) having a spectrum of a narrow band when wavelengths of two resonance modes which are not orthogonal to each other approach each other and then are coupled to each other.
FIG. 5 to FIG. 9 are views showing an arrangement shape of various laminated members on a substrate of a color filter according to an exemplary embodiment of the present invention.
FIG. 10 is an excitation schematic view of electrical resonance (a) and magnetic resonance (b) for light incident from a laminated member according to an exemplary embodiment of the present invention.
FIG. 11 is a graph showing an independent change of only an electrical resonance mode wavelength depending on an arrangement period change of a plurality of laminated members in a color filter according to an exemplary embodiment of the present invention.
FIG. 12 is a graph showing an independent change of only a magnetic resonance mode wavelength depending on a thickness change of a dielectric layer of a laminated member in a color filter according to an exemplary embodiment of the present invention.
FIG. 13 to FIG. 15 are graphs calculating a transmittance after manufacturing a color filter to transmit only specific colors.

### [Mode for Invention]

A color filter according to an exemplary embodiment of the present invention includes a substrate; and a plurality of laminated members disposed with a predetermined period on the substrate, wherein each laminated member includes: a first metal layer; a dielectric layer positioned on the first metal layer; and a second metal layer positioned on the dielectric material, and the laminated member simultaneously excites electrical resonance and magnetic resonance in a visible ray region and transmits light that does not resonate.

A color filter according to another exemplary embodiment of the present invention includes a substrate; and a plurality of single layer metal members disposed with a predetermined period on the substrate, wherein the single layer metal member includes a first single layer metal member and a plurality of second single layer metal members having different diameters from each other, the single layer metal member blocks light for the wavelength in which an electric resonance is excited, and the single layer metal member transmits light for each wavelength in which the electric resonance is coupled.

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

In the drawings, the thickness of layers, films, panels, regions, etc., are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

Now, a color filter according to an exemplary embodiment of the present invention will be described with reference to drawings.

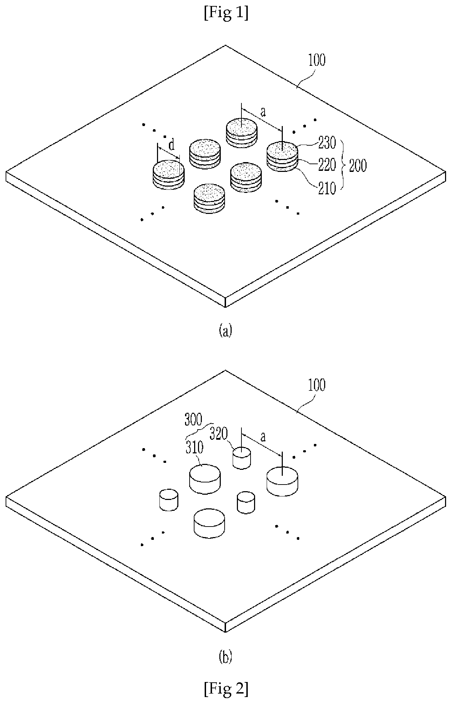

FIG. 1 is a view showing a color filter according to an exemplary embodiment of the present invention. FIG. 1 (a) shows the color filter in which a plurality of laminated members 200 is positioned on a substrate 100, and FIG. 1 (b) shows the color filter in which a plurality of single layer metal members 300 is positioned on a substrate 100.

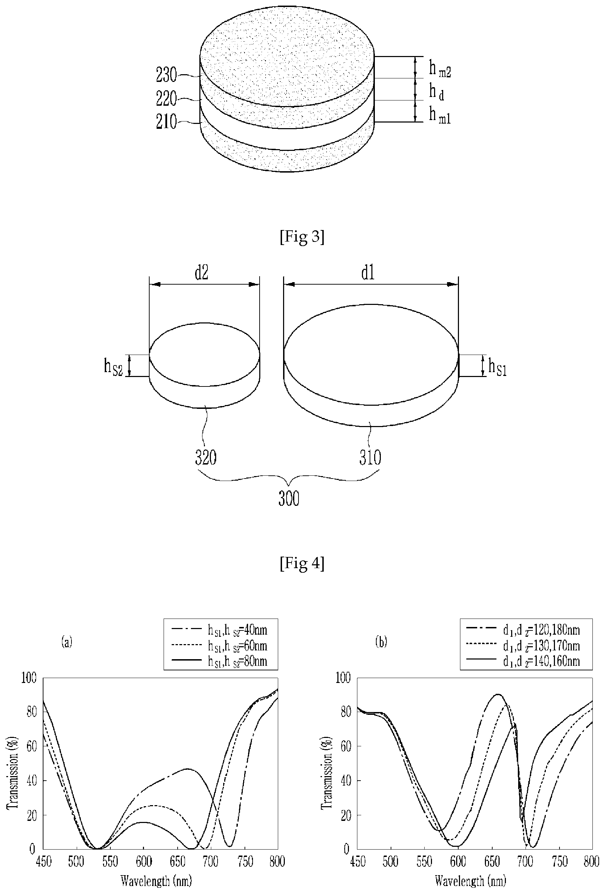

FIG. 2 shows one laminated member of the color filter according to FIG. 1 (a). FIG. 3 shows the single layer metal member 300 of the color filter according to FIG. 1 (b).

Referring to FIG. 1 (a), in a color filter according to an exemplary embodiment of the present invention, a plurality of laminated members 200 are disposed on a substrate 100. Also, referring to FIG. 1 (b), a single layer metal member 300 including a first single layer metal member 310 and a second single layer metal member 320 having different diameters from each other is disposed. The substrate 100 may be a glass substrate, but is not limited thereto.

FIG. 2 shows one laminated member 200 according to the example of FIG. 1 (a). The laminated member includes a first metal layer 210, a dielectric layer 220 positioned on the first metal layer, and a second metal layer 230 positioned on the dielectric layer.

When visible rays are incident to the laminated member 200, the laminated member 200 induces magnetic resonance and electrical resonance in a specific wavelength of the incident visible rays. Here, the light of the magnetic-resonated wavelength and the light of the electrical-resonated wavelength are absorbed or reflected to the laminated member 200, and finally the laminated member 200 only transmits the light of the non-resonated wavelength. Accordingly, the laminated member 200 functions as a color filter only transmitting only the light of the specific wavelength.

In this case, the wavelength of the light of which the magnetic resonance and the electrical resonance are excited may be controlled by changing a diameter of each laminated member, an arrangement period of the plurality of laminated members on the substrate, the thicknesses of the first metal layer, the dielectric layer, and the second metal layer, etc.

FIG. 3 is a view showing a first single layer metal member and a second single layer metal member of the color filter according to an example of FIG. 1 (b). The first single layer metal member 310 and the second single layer metal member 320 have the different diameters from each other. Referring to FIG. 1 (b), the first single layer metal member 310 and the second single layer metal member 320 having the different diameters from each other are alternately arranged.

When a visible ray is incident to the single layer metal member, two electric resonances are excited by each single layer metal member. In other words, because the resonant wavelength varies depending on the diameter of the metal member, two electrical resonances that resonate at different wavelengths occur.. The two electric resonances excited in this manner are not orthogonal to each other, and may obtain a transmittance result having a narrow band spectrum at the part where two modes are coupled.

FIG. 4 is a view showing computer simulation result of a transmittance (a) having a spectrum of a wide band when wavelengths of two mutually orthogonal resonance modes approach each other and then are not coupled to each other and a transmittance (b) having a spectrum of a narrow band when wavelengths of two resonance modes which are not orthogonal to each other approach each other and then are coupled to each other. That is, in FIG. 4(a), in a case of Hs=80, a blocking characteristic having low transmittance less than 20% may be obtained in the wide band of about 500-700nm. However, in FIG. 4 (b), in a case of d=120 and 180nm, a transmission region having the transmittance more than 60% may be obtained as the narrow bane of about 610-680nm. When these are properly combined, it is possible to design the color filter with high purity and brightness.

Next, each part of the laminated member 200 or the single layer metal member 300 applied to the color filter of the present disclosure is described.

The first metal layer 210 and the second metal layer 230 of the laminated member 200, and the first single layer metal member 310 and the second single layer metal member 320 of the single layer metal member 300 may include at least one material selected from a group including aluminum, silver, gold, platinum, copper, chromium, nickel, magnesium, sodium, potassium, graphene, indium tin oxide, indium zinc oxide, and doping semiconductor materials. The doped semiconductor material means an ordinary semiconductor material in which a carrier is doped and then a charge density is increased. The first metal layer 210 and the second metal layer 230 may include a single material, or may be formed by mixing the plurality of materials selected from the above-described group. Likewise, the first single layer metal member 310 and the second single layer metal member 320 may include a single material, or may be formed by mixing the plurality of materials selected from the above-described group.

The first metal layer 210 and the second metal layer 230 may be formed of the same material or of different materials. Likewise, the first single layer metal member 310 and the second single layer metal member 320 may be formed of the same material or of different materials.

Each of the thickness hₘ₁ of the first metal layer 210, the thickness hₘ₂ of the second metal layer 230, the thickness hₛ₁ of the first single layer metal member, and the thickness hₛ₂ of the second single layer metal member may be between 1 nm and 200 nm. The thickness may be appropriately controlled depending on the wavelength to induce the electrical resonance or the magnetic resonance. The thicknesses of the first metal layer 210 and the second metal layer 230 may be the same as or different from each other. Also, in the example of FIG. 1 (b), the thickness of the first single layer metal member 310 and the second single layer metal member 320 may be the same as or different from each other.

In the example of FIG. 1 (a), the dielectric layer 220 may include an oxide, a nitride, semiconductor materials, or polymer materials. The dielectric layer may contain the above materials solely or a plurality of the materials. In detail, the dielectric layer 220 may include at least one material selected from a group including SiO₂, Al₂O₃, Ag₂O, Si₃N₄, MgF₂, and amorphous silicon, however it is not limited thereto.

The dielectric layer 220 may use a material in which a real part of a dielectric constant (permittivity) is positive, without restriction. The thickness (h_{d}) of the dielectric layer 220 may be between 1 nm and 500 nm. The thickness of the dielectric layer may be appropriately controlled depending on the wavelength to induce the electrical resonance or the magnetic resonance.

As shown in FIG. 2, the first metal layer 210, the dielectric layer 220, and the second metal layer 230 are sequentially deposited to form the laminated member. In this case, the shape of the laminated member may be a cylinder shape, a polygonal columnar shape, or a spherical shape. In FIG. 1 and FIG. 2, the laminated member having the cylinder shape is shown. As shown in FIG. 1 and FIG. 2, when the laminated member 200 has the cylinder shape, the diameter (d) of the cylinder may be between 50 nm and 1000 nm.

Also, as shown in FIG. 3, the first single layer metal member 310 and the second single layer metal member 320 having the different diameter from each other are alternately arranged. In this case, the shape of the single layer metal member 300 may be the cylinder shape, the polygonal columnar shape, or the spherical shape. In FIG. 1 and FIG. 3, the single layer metal member having the circular cylinder shape is shown. As shown in FIG. 1 and FIG. 3, when the single layer metal member 300 has the circular cylinder, the diameter of the cylinder may be between 50 nm and 1000 nm. However, the diameter d1 of the first single layer metal member and the diameter d2 of the second single layer metal member are different from each other.

As shown in FIG. 1, for the color filter according to an exemplary embodiment of the present invention, the plurality of laminated members 200 are positioned, or the single layer metal members 300 having two different diameters are positioned on the substrate 100. In this case, an arrangement period (a) may be between 200 nm and 2000 nm. the arrangement period (a) is an interval between laminated members 200 adjacent to each other in FIG. 1 (a) or between the first single layer metal member 310 and the second single layer metal member 320 in FIG. 1 (b).

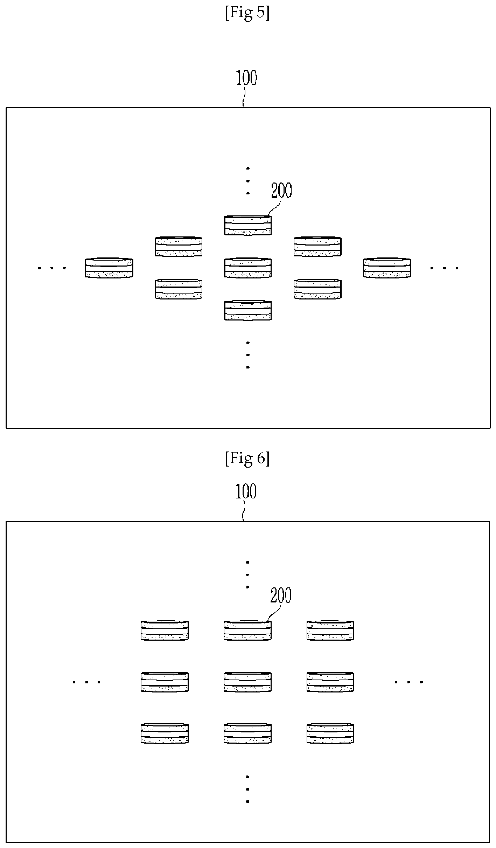

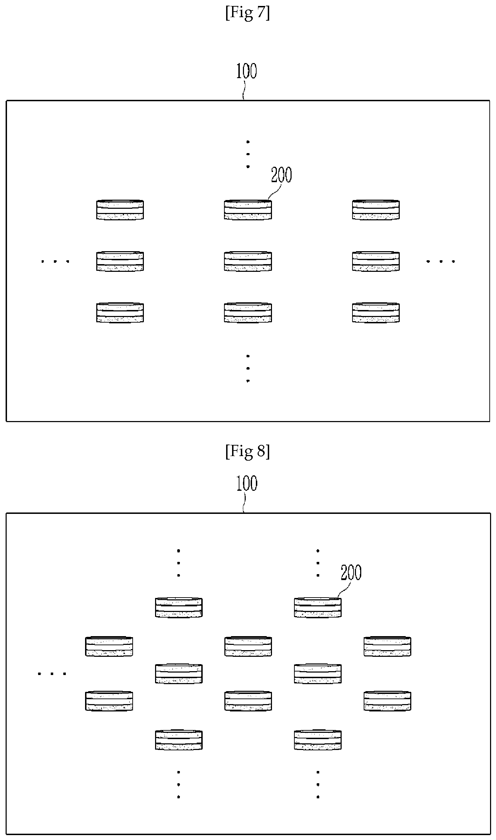

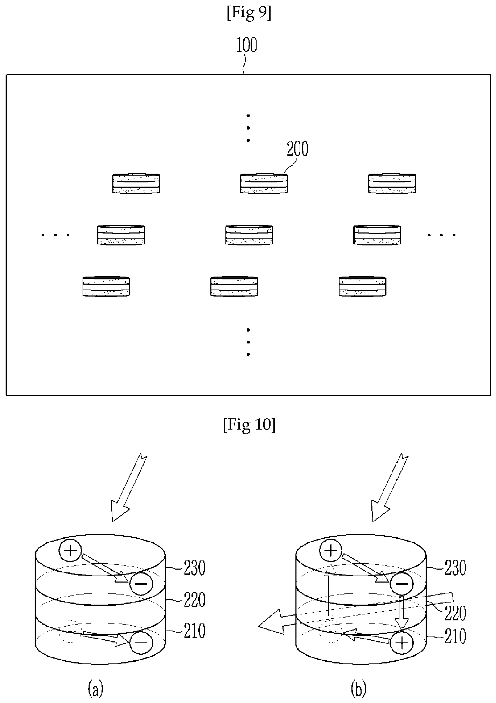

Each of the laminated member 200 or the single layer metal member 300 may be arranged in various shape. FIG. 5 to FIG. 9 show the arrangement shapes of the various laminated members 200 on the substrate 100. As shown in FIG. 5, the laminated members may be arranged in a rhombus shape, and as shown in FIG. 8, they may be arranged in a square shape. Also, as shown in FIG. 7, the laminated members may be arranged in a rectangular shape, as shown in FIG. 8, they may be arranged in a hexagon shape, and as shown in FIG. 9, they may be arranged in a parallelogram shape. Although it is not shown in the drawings, if the arrangement has a regular repeating shape, the laminated members 200 or the single layer metal members 300 may be arranged without restriction to shape. FIG. 5 to FIG. 9 are illustrated with reference to the laminated member 200, however it is the same in the case of the single layer metal member 300.

That is, each laminated member 200 or single layer metal member 300 are not randomly arranged on the substrate, but may be arranged to have a specific shape with a predetermined period.

As above-described, in the color filter according to an exemplary embodiment of the present invention, the plurality of laminated members 200 made of the first metal layer 210, the dielectric layer 220, and the second metal layer 230 are arranged or the first single layer metal member 310 and the second single layer metal member 320 are alternately arranged. In this case, each laminated member simultaneously excites the electrical resonance and the magnetic resonance for the incident visible rays and transmits the light of the wavelength where the electrical resonance or the magnetic resonance is not excited. Also, the single layer metal members 300 having two different diameters from each other excite two electric resonance and transmit the light of the wavelength having the narrow band width in which two resonance modes are coupled.

FIG. 10 is a schematic view of electrical resonance excitation (a) and magnetic resonance excitation (b) for light incident from a laminated member according to an exemplary embodiment of the present invention. As shown in FIG. 10 (a), if the light of the specific wavelength causing the electrical resonance mode is incident to the laminated member, this light excites the electric field to the laminated member of the first metal layer 210, the dielectric layer 220, and the second metal layer 230, thereby causing the electrical resonance. Also, as shown in FIG. 10 (b), if the light of the specific wavelength causing the magnetic resonance mode is incident to the laminated member, this light causes currents of which directions are different from each other in the first metal layer 210 and the second metal layer 230, and the magnetic is induced by these currents, thereby causing the magnetic resonance.

Here, the specific wavelength causing the electrical resonance or the magnetic resonance is absorbed by the laminated member and then is not transmitted. Also, the wavelength causing the electrical resonance or the magnetic resonance may be appropriately controlled by changing the thickness of each layer of the laminated member and the arrangement period between the plurality of laminated members.

Accordingly, when controlling the thickness of the laminated member and the arrangement period so as to cause the electrical resonance in a red wavelength and the magnetic resonance in a green wavelength among three colors of red, green, blue, the red wavelength and the green wavelength are absorbed such that the laminated member only transmits the light of a blue wavelength, thereby being a blue color filter. This is the same principle for the red color filter.

However, in the case of the green color filter, the single layer metal member of the different diameters from each other resonance in each red wavelength, blue wavelength. And the transmittance of the narrow band is obtained in the green wavelength in which the coupling of two modes is excited, thereby functioning as the green color filter. That is, the green color may have the structure like the example of FIG. 1 (b).

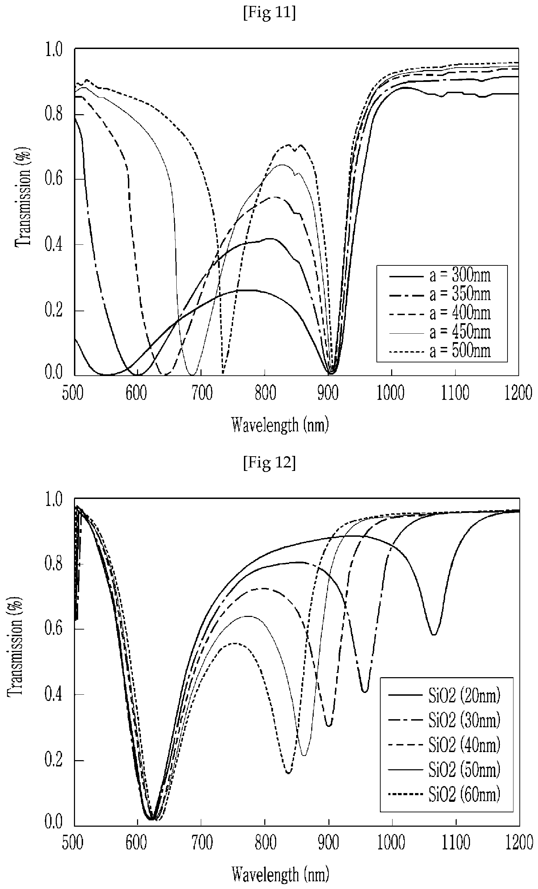

FIG. 11 is a graph showing a change of an electrical resonance mode wavelength depending on an arrangement period change of a plurality of laminated members in a color filter according to an exemplary embodiment of the present invention. FIG. 12 is a graph showing a change of an magnetic resonance mode wavelength depending on a thickness change of a dielectric layer of a laminated member in a color filter according to an exemplary embodiment of the present invention.

Referring to FIG. 11, if the arrangement period a is changed from 300 nm to 500 nm, it may be confirmed that the wavelength in which the electrical resonance mode occurs is changed. That is, it may be confirmed that the wavelength in which the electrical resonance mode occurs moves from about 550 nm to about 750 nm as the arrangement period is increased.

Referring to FIG. 12, if the thickness of the SiO₂ dielectric layer is differentiated, it may be confirmed that the wavelength in which the magnetic resonance mode occurs is changed. As shown in FIG. 12, it may be confirmed that the wavelength in which the magnetic resonance occurs moves from about 1100 nm to about 850 nm if the thickness of the dielectric layer is increased from 20 nm to 60 nm.

That is, for the color filter according to an exemplary embodiment of the present invention, the arrangement period of the plurality of laminated members may be controlled and the thickness of each laminated member may be controlled so as to induce the electrical resonance and the magnetic resonance in the desired wavelength, and the specific color can represent by transmitting the e wavelength in which the electrical resonance or the magnetic resonance does not occur.

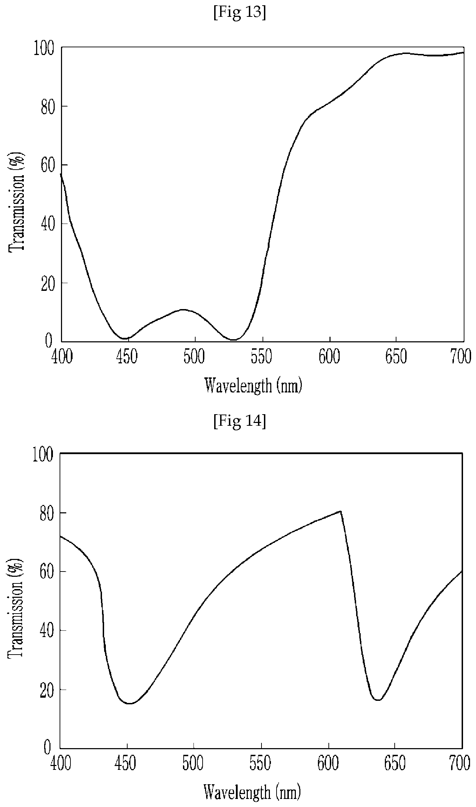

FIG. 13 to FIG. 15 show exemplary embodiments for calculating transmittance of color filter. The color filter transmit only specific colors by changing a thickness and a wavelength of an actual laminated member or single layer metal member. In this case, the red color filter and the blue color filter are manufactured by using the laminated member of FIG. 1 (a), and the green color filter are manufactured by using the laminated member of FIG. 1 (b).

In this case, a glass substrate is used as the substrate, and the first metal layer of silver, the dielectric layer of silicon dioxide, and the second metal layer of silver are used, and the single layer metal member is manufactured by using aluminum. The laminated member and the single layer metal member are manufactured with the circular cylinder shape.

The red color filter is simulated. The red color filter include laminated member. The laminated member arranged hexagonal structure. The arrangement period of the laminated member is 200 nm, the diameter of the laminated member is 95 nm, the thickness of the first metal layer and the second metal layer is 30 nm, and the thickness of the dielectric material layer is 60 nm

FIG. 13 represents the transmittance depending on the wavelength of the red color filter manufactured by this method. Referring to FIG. 13, it may be confirmed that the high transmittance appears near the 630 nm wavelength of the red region, and the low transmittance appears near the 530 nm wavelength of the green region and near the 450 nm wavelength of the blue region. That is, in the case of the red color filter, the magnetic resonance and the electrical resonance are excited in the green region and the blue region such that the light of the green and blue wavelengths is absorbed by the laminated member, and only the wavelength of the red region is transmitted.

The green color filter is simulated. The green color filter include single layer metal member of the quadrangle arrangement structure. The arrangement period of single layer metal member is 295 nm, and the diameter of the first single layer metal member is 120 nm and the diameter of the second single layer metal member is 190 nm.

FIG. 14 represents the transmittance depending on the wavelength of the green color filter manufactured by this method. Referring to FIG. 12, the high transmittance appears near the 530nm wavelength of the green region, and the relatively low transmittance appears near the 450 nm wavelength of the blue region and near the 630 nm wavelength of the red region. That is, in the case of the green color filter, two electrical resonance are excited in the red and the blue such that the light of the red and blue wavelengths is absorbed by the laminated member, and only the wavelength of the green region is transmitted.

Also, the blue color filter is simulated. The blue filter include each laminated member of the hexagon arrangement structure. The arrangement period of the laminated member is 300 nm, the diameter of the laminated member is 150 nm, the thickness of the first metal layer and second metal layer is 30 nm, and the thickness of the dielectric material layer is120 nm.

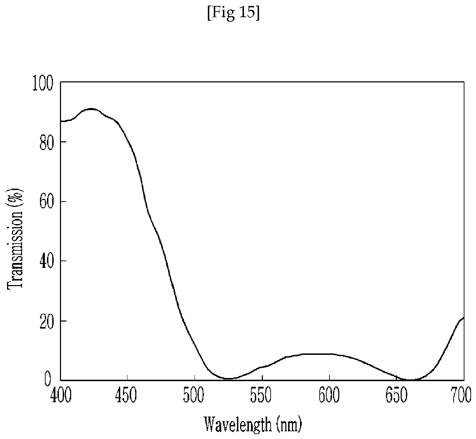

FIG. 15 represents the transmittance depending on the wavelength of the blue color filter manufactured by this method. Referring to FIG. 15, the high transmittance appears near the 450 nm wavelength of the blue region, and the relatively low transmittance appears near the 530 nm wavelength of the green region and near the 630 nm wavelength of the red region. That is, in the case of the blue color filter, the magnetic resonance and the electrical resonance are excited in the green and the red such that the light of the green and red wavelengths is absorbed by the laminated member, and only the wavelength of the blue region is transmitted.

In the case of the ordinary color filters, three colors of red, green, and blue are realized with the organic matter including the dyes and the pigments. However, these organic materials reduced the life-span of the display device when being applied to the display device, such that it was difficult to use it for a long time due to a reduction in the chemical and thermal stability. However, since the color filter according to an exemplary embodiment of the present invention is made only of the metal and the dielectric material, the chemical and thermal stability are excellent, and the life-span of the product may be improved.

However, when the color filters made of these metals and dielectric materials use the resonance wavelength as the transmission wavelength, it is difficult to obtain the high transmittance due to a loss by the resonance. However, in the case of the color filter according to an exemplary embodiment of the present invention, the electrical resonance and the magnetic resonance are simultaneously excited or two electric resonances are simultaneously excited, and the off-resonance regime is used as the transmission wavelength by appropriately utilizing the orthogonality of two resonance modes, thereby obtaining the high transmittance without the loss.

That is, the wavelength of the off-resonance regime is transmitted such that the transmittance close to 100 %, and the wavelengths of the remaining two colors are adjusted for the transmittance to be close to 0 % by using the electrical resonance and the magnetic resonance mode or two electrical resonances, thereby producing the color filter RGB transmission type with high color reproduction rate.

Accordingly, the color filter according to an exemplary embodiment of the present invention has excellent chemical and thermal stability while having similar or higher transmittance compared with a conventional organic material color filter, and when applying this color filter to the display device, the display device having the long life-span while having low power and high efficiency can be provided.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A color filter comprising:
a substrate; and
a plurality of laminated members disposed with a predetermined period on the substrate,
wherein each laminated member includes:
a first metal layer;
a dielectric layer positioned on the first metal layer; and
a second metal layer positioned on the dielectric material, and
the laminated member simultaneously excites electrical resonance and magnetic resonance in a visible ray region and transmits light that does not resonate.

2. The color filter of claim 1, wherein;
the first metal layer and the second metal layer include at least one selected from a group including aluminum, silver, gold, platinum, copper, chromium, nickel, magnesium, sodium, potassium, graphene, indium tin oxide, indium zinc oxide, and doped semiconductor materials.

3. The color filter of claim 2, wherein:
the first metal layer and the second metal layer include the same material.

4. The color filter of claim 2, wherein:
the first metal layer and the second metal layer include different material.

5. The color filter of claim 1, wherein:
the dielectric material layer includes an oxide, a nitride, a semiconductor material, or a polymer material.

6. The color filter of claim 5, wherein:
the dielectric material layer includes at least one material selected from a group consisting of SiO₂, Al₂O₃, Ag₂O, Si₃N₄, MgF₂, an amorphous silicon.

7. The color filter of claim 1, wherein:
the plurality of laminated members disposed with a predetermined period on the substrate is disposed one shape selected from a group consisting of a rhombus shape, a square shape, a rectangle shape, a hexagon shape, and a parallelogram shape.

8. The color filter of claim 1, wherein:
the arrangement period of the plurality of laminated members is between 200 nm to 2000 nm.

9. The color filter of claim 1, wherein:
the thickness of the first metal layer and the second metal layer is between 1 nm to 200 nm.

10. The color filter of claim 1, wherein:
the thickness of the dielectric material layer is between 1 nm and 500 nm.

11. The color filter of claim 1, wherein:
the laminated member of the first metal layer, the dielectric layer, and the second metal layer has a shape of a circular cylinder, a polygonal columnar shape, or a spherical.

12. The color filter of claim 11, wherein:
the laminated member of the first metal layer, the dielectric layer, and the second metal layer has the shape of the circular cylinder, and
the diameter of the laminated member is between 50 nm and 1000 nm.

13. The color filter of claim 1, wherein:
the laminated member transmits a wavelength of 200 nm to 20 um.

14. The color filter of claim 1, wherein:
the partial laminated member of the plurality of laminated members resonates light having a wavelength of a red light and a green light and transmits light having a wavelength of a blue light.

15. The color filter of claim 1, wherein:
the partial laminated member of the plurality of laminated members resonates light having a wavelength of a blue light and a green light and transmits light having a wavelength of a red light.

16. The color filter of claim 1, wherein:
the partial laminated member of the plurality of laminated members resonates light having a wavelength of a blue light and a red light and transmits light having a wavelength of a green light.

17. A color filter comprising:a substrate; and
a plurality of single layer metal members disposed with a predetermined period on the substrate,
wherein the single layer metal member includes a first single layer metal member and a plurality of second single layer metal members having different diameters from each other,
the single layer metal member blocks light for the wavelength in which an electric resonance is excited, and
the single layer metal member transmits light for each wavelength in which the electric resonance is coupled.

18. The color filter of claim 17, wherein:
the first single layer metal member and the second single layer metal member independently includes at least one selected from a group consisting of aluminum, gold, silver, platinum, copper, chromium, nickel, magnesium, sodium, potassium, graphene, indium tin oxide, indium zinc oxide, doped semiconductor material.

19. The color filter of claim 17, wherein:
the plurality of single layer metal member disposed with a predetermined period on the substrate is formed of one shape selected from a group consisting of a rhombus shape, a square shape, a rectangle shape, a hexagon shape, and a parallelogram shape.

20. The color filter of claim 17, wherein:
the arrangement period of the plurality of single layer metal members is between 200 nm to 2000 nm.

21. The color filter of claim 17, wherein:
the thickness of the single layer metal member is between 1 nm to 200 nm.

22. The color filter of claim 17, wherein:
the single layer metal member has a shape of a circular cylinder, a polygonal columnar shape, or a spherical.

23. The color filter of claim 17, wherein:
the color filter transmits a green light.
